# EUROPÄISCHE PATENTANMELDUNG

(11) **EP 1 178 553 A2**
(43) Veröffentlichungstag der Anmeldung: **06.02.2002**
(21) Anmeldenummer: 01118320.9
(22) Anmeldetag: 27.07.2001
(51) Int. Cl.: H01M 8/06, H01M 8/04

(54) **Vorrichtung zur Aufbereitung eines Kraftstoff-Kühlmittel-Gemisches in einem Brennstoffzellensystem**

(30) Priorität: 01.08.2000 DE 10037402
(71) Anmelder: DaimlerChrysler AG, 70567 Stuttgart (DE)
(72) Erfinder: Müller, Jens Thomas, Dr., 81827 München (DE); Schnetzler, Sven, 35037 Marburg/Lahn (DE); Waitkat, Peter, 89075 Ulm (DE)

(57) **Zusammenfassung**

Eine Vorrichtung dient zur Aufbereitung eines Kraftstoff-Kühlmittel-Gemisches in einem Brennstoffzellensystem. Bei dem Brennstoffzellensystem handelt es sich dabei insbesondere um ein Direkt-Methanol-Brennstoffzellensystem. Das Kraftstoff-Kühlmittel-Gemisch zirkuliert in einem Kreislaufsystem, welches eine Gemischfördereinrichtung, einen Anodenraum einer Brennstoffzelle und einen Ionentauscher aufweist. Weiterhin wird Kraftstoff über eine Leitung aus einem Tank in das Kreislaufsystem geführt. In dieser Leitung ist ein Anionen- und Kationentauscher angeordnet. Zusätzlich ist im Kreislaufsystem noch ein Kationentauscher angeordnet.

## Beschreibung

Die Erfindung betrifft eine Vorrichtung zur Aufbereitung eines Kraftstoff-Kühlmittel-Gemisches in einem Brennstoffzellensystem nach der im Oberbegriff von Anspruch 1 näher definierten Art.

Aus der gattungsgemäßen DE 198 07 878 A1 ist ein Brennstoffzellensystem mit einem Anodenraum und einem Kathodenraum bekannt. Die beiden Räume sind durch eine protonenleitende Membran voneinander getrennt, wobei dem Kathodenraum sauerstoffhaltiges Gas zugeführt wird, und wobei dem Anodenraum ein flüssiges Kühlmittel/Brennstoffgemisch zugeführt wird. Der Anodenraum ist dabei Bestandteil eines Kreislaufes, welcher zusätzlich noch einen Kühler, einen Gasabscheider und eine Pumpe umfaßt. Dieser Anodenkreislauf des Brennstoffzellensystems ist außerdem in einen Umwälzkreis und einen Kühlkreis aufgeteilt. Außerdem wird aus einem Tank über eine Leitung Brennstoff in den Kreislauf geführt.

In einer weiteren Ausgestaltung der Erfindung ist in dem Kühlkreis stromaufwärts des Gasabscheiders ein Ionentauscher vorgesehen.

Da es bei einem derartigen Einsatzfall um die Entfernung von Kationen und Anionen aus dem Kühlmittel/Brennstoffgemisch geht, muß zum Beispiel ein stark basischer Ionentauscher entsprechend groß ausgeführt werden, um nicht durch das üblicherweise mitgeführte in der flüssigen Phase gelöste CO₂ bereits nach einer sehr kurzen Betriebsdauer voll beladen zu sein. Außerdem stellen die in dem Gemisch vorliegenden Temperaturen ein Problem dar, da handelsübliche und damit kostengünstige Ionentauschersysteme für die in einem derartigen Brennstoffzellensystem auftretenden Betriebstemperaturen nicht geeignet sind und deshalb jeweils eine Kühlung des sie durchströmenden Gemischs vor dem Eintritt in den eigentlichen Ionentauscher erforderlich machen. Deshalb kann der Ionentauscher in nachteiliger Weise nicht unmittelbar vor dem Anodenraum plaziert werden.

Ein ähnlich aufgebautes System, welches ebenfalls die Aufbereitung von Wasser in einem PAFC-Brennstoffzellensystem beschreibt, ist in der US 5,980,716 beschrieben. Das System weist dabei eine Ionentauschereinrichtung auf Basis eines Harzionentauschers und eines Elektrodeionisierungssystems auf. Auch hier gelten vergleichbare Nachteile, wie bereits oben beschrieben, wobei hier zur Lösung der Problematik ein sehr aufwendiges Entgasungs- und Filtersystem ausgebildet ist, bei welchem CO₂ und in dem im Kühlwasser auftretendes Eisenoxyd vor dem Erreichen der Ionentauschereinrichtungen entfernt werden.

Außerdem beschreibt die US 5,425,858 und in einer entsprechenden Weiterentwicklung davon die US 5,954,937 eine Vorrichtung zur kapazitiven Deionisierung und elektrochemischen Reinigung eines Stoffstroms. Der Aufbau einer derartigen Vorrichtung besteht aus stackartig übereinander gestapelten Zellen, durch welche der Stoffstrom geleitet wird. Jede der Zellen weist zwei Elektroden mit einer vergleichsweise großen Oberfläche auf. Diese Elektroden sind elektrisch in der Art verschaltet, daß es zu einem Feld zwischen ihnen kommt. Die in dem Stoffstrom befindlichen aufgeladenen Stoffe werden von diesem Feld entsprechend beeinflußt und zu der jeweiligen Elektrode abgelenkt. Der Stoffstrom, welcher die Anlage verläßt, ist dann von elektrisch leitenden Stoffen befreit, da diese an den einzelnen Elektroden zurückbleiben.

Es ist Aufgabe der Erfindung, eine Vorrichtung zur Aufbereitung eines Kraftstoff-Kühlmittel-Gemisches in einem Brennstoffzellensystem zu schaffen, welche sicherstellt, daß die Ionenkonzentration des zumindest teilweise in einem Kreislaufsystem zirkulierenden Kraftstoff-Kühlmittel-Gemisches unter einem für eine Membran in einem Anodenraum einer Brennstoffzelle des Brennstoffzellensystems kritischen Niveau bleibt.

Erfindungsgemäß wird diese Aufgabe durch die im kennzeichnenden Teil von Anspruch 1 genannten Merkmale gelöst.

Die Anordnung eines zusätzlichen Anionen- und Kationentauschers in der Leitung zwischen dem Tank und dem Kreislaufsystem weist den Vorteil auf, daß trotz der kritischen Betriebsbedingungen im Kreislaufsystem herkömmliche Ionentauscher eingesetzt werden können. Der im Tank verfügbare Kraftstoff weist üblicherweise Verunreinigungen auf. Diese Verunreinigungen stammen entweder bereits aus der Herstellung oder kommen während des Transportes oder durch die Infrastruktur in den Kraftstoff. Der Kraftstoff wird erfindungsgemäß bereits vor dem Eintritt in das Kreislaufsystem vollständig gereinigt. In dieser Leitung herrscht ein niedriges Temperaturniveau, so daß keine Probleme mit der thermischen Belastbarkeit der Ionentauscher auftreten. Außerdem weist der Kraftstoff kein oder nur sehr wenig gelöstes CO₂ auf, was zu einer sehr langen Lebensdauer des Anionentauschers beiträgt. Weiterhin muß nur ein geringer Volumenstrom gereinigt werden, so daß es zu keinen Problemen bezüglich Druckverlust oder mechanischer Haltbarkeit kommt. Schließlich kann durch die vollständige Reinigung des Kraftstoffes vor dem Eintritt in das Kreislaufsystem eine hohe Reinheit im Kreislaufsystem erreicht werden. Im Kreislaufsystem selbst treten dann nur noch sehr wenige Verunreinigungen auf, die mit Hilfe eines im Kreislaufsystem angeordneten Kationentauscher entfernt werden können. Da die herkömmliche Kationentauscher im Unterschied zu Anionentauscher bereits ausreichende thermische Stabilität aufweisen, ist deren Anordnung im Kreislaufsystem unkritisch. Weiterhin ist vorteilhaft, daß im Kreislaufsystem nur noch ein kleiner Ionentauscher benötigt wird.

Der Kationentauscher kann entweder direkt im Kreislaufsystem oder aber auch in einer Bypassleitung angeordnet werden. Die Anordnung in einer Bypassleitung kann insbesondere dann notwendig werden, wenn in zukünftigen Brennstoffzellensystemen mit weiter erhöhten Betriebstemperaturen gearbeitet wird. Wird eine Bypassleitung vorgesehen, so kann zusätzlich auch noch ein Anionentauscher in der Bypassleitung vorgesehen werden.

Um die Temperaturen im Ionentauscher auf zulässige Werte zu verringern kann außerdem noch ein Kühlwärmetauscher und/oder ein Heizwärmetauscher stromauf beziehungsweise stromab des Ionentauschers vorgesehen werden. So kann im Kreislaufsystem die gewünschte Temperatur aufrechterhalten und gleichzeitig die Temperatur im Ionentauscher reduziert werden.

Dadurch, daß der in der Bypassleitung fließende Teil des Kraftstoff-Kühlmittel-Gemisches, von den Ionen befreit ist und danach wieder mit dem Hauptstrom des Kreislaufs zusammenfließt, kann erreicht werden, daß auch die Ionenkonzentration in dem im Hauptstrom fließenden Kraftstoff-Kühlmittel-Gemisch reduziert wird.

Durch die steuer- oder regelbare Ventileinrichtung kann dabei das Verhältnis der Volumenströme zwischen dem Hauptstrom und dem Bypass derart eingestellt werden, daß die in dem Bypass stattfindende Reduzierung der Anzahl an Ionen in dem Kraftstoff-Kühlmittel-Gemisch ausreicht, damit es in dem Kreislauf nicht zu einer Konzentration an Ionen kommt, welche für einzelne Bauteile des Kreislaufsystems, insbesondere eine Membran in dem Anodenraum der Brennstoffzelle, kritisch sein könnte. In einer bevorzugten Ausgestaltung erfolgt die Steuerung beziehungsweise Regelung des Bypassvolumenstromes in Abhängigkeit von der Temperatur des Kraftstoff-Kühlmittel-Gemisches.

Außerdem bietet die Anordnung in der Bypassleitung den Vorteil, daß die Ionentauschereinrichtung vergleichsweise klein ausgelegt werden kann, da der sie durchströmende Volumenstrom im Bereich der Bypassleitung, im Verhältnis zu dem den gesamten Kreislauf durchströmenden Volumenstrom, sehr gering ist.

Durch die Entfernung der ionischen Stoffe aus dem Kraftstoff-Kühlmittel-Gemisch, ergibt sich der besondere Vorteil, daß Ablagerungen auf der Membran vermieden werden können, welche zu einer Alterung oder zu der Zerstörung der Membran führen könnten. Außerdem können die Ionen unter Anwesenheit bestimmter anderer Stoffe, beispielsweise CO₂, Verbindungen eingehen, welche ausfallen und entsprechende Verschmutzungen in dem Brennstoffzellensystem hervorrufen könnten.

In einer vorteilhaften Ausgestaltung der Erfindung ist zumindest einer der Ionentauscher als kapazitives Deionisierungssystem oder als Elektrodeionisierungssystem ausgebildet. Diese beiden alternativen, vorteilhaften Weiterbildungen der Erfindung ermöglichen dabei neben einem Abscheiden der Ionen auch ein zumindest teilweises Ausscheiden des in der Flüssigkeit in Form von Kohlensäure gelösten CO₂. Dies ermöglicht wiederum den Vorteil, daß die Aggressivität des Gemischs, welche durch das gelöste CO₂ ansteigt und für Korrosionserscheinungen im Bereich des Brennstoffzellensystems sorgen kann, vermindert wird.

Außerdem ergeben sich durch die Reduzierung der leitenden Bestandteile in dem Kraftstoff-Kühlmittel-Gemisch weitere Vorteile dadurch, daß dessen Leitfähigkeit durch die Entfernung der Ionen und des gelösten CO₂ vermindert wird, was zu einer Verringerung der unerwünschten Kriechströme in dem Brennstoffzellensystem führt.

Der Ionentauscher in der Leitung zwischen dem Tank und dem Kreislaufsystem ist vorzugsweise als MischbettIonentauscher ausgebildet. Es können jedoch auch zwei separate Harzbettionentauscher vorgesehen werden.

Weitere vorteilhafte Ausgestaltungen der Erfindung ergeben sich aus den Unteransprüchen und aus den anhand der Zeichnung nachfolgend dargestellten Ausführungsbeispielen.

Es zeigt:
- Fig. 1: einen stark schematisierten Aufbau der erfindungsgemäßen Vorrichtung;
- Fig. 2: einen stark schematisierten Aufbau der erfindungsgemäßen Vorrichtung in einer alternativen Ausführungsform;
- Fig. 3: einen stark schematisierten Aufbau der erfindungsgemäßen Vorrichtung in einer weiteren alternativen Ausführungsform; und
- Fig. 4: eine weitere Ausführungsform der erfindungsgemäßen Vorrichtung.

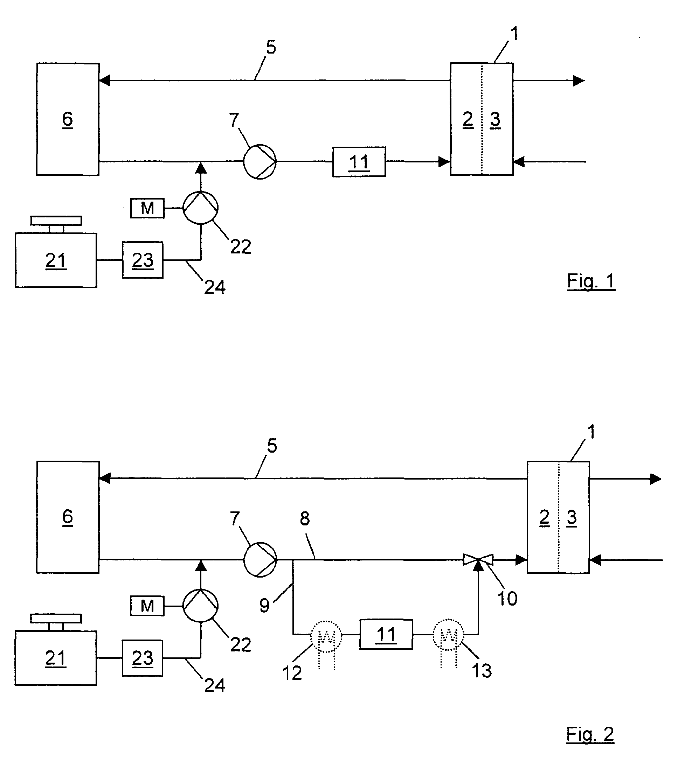

Fig. 1 zeigt eine Brennstoffzelle 1 mit einem Anodenraum 2 und einem Kathodenraum 3. Der Kathodenraum 3 wird von einem sauerstoffhaltigen Gas, beispielsweise Luft, durchströmt. Der Anodenraum 2 ist durch eine protonenleitende Membran von dem Kathodenraum 3 getrennt. Die eigentliche Funktionsweise der Brennstoffzelle 1 ist für die Erfindung nicht weiter relevant und daher nicht näher erläutert.

Der Anodenraum 2 ist Teil eines Kreislaufsystems 5, in welchem ein Kraftstoff-Kühlmittel-Gemisch zumindest teilweise zirkuliert und dabei als Brennstoff und als Kühlmittel dient. Als Kraftstoffe können insbesondere Kohlenwasserstoffe oder Alkohole, beispielsweise Methanol, verwendet werden. Als Kühlmittel wird vorzugsweise Wasser verwendet. Das Kreislaufsystem 5 weist ein hier prinzipmäßig dargestelltes Ausdehnungsgefäß 6 auf, welche außerdem einen nicht dargestellten Gasabscheider enthalten kann. Außerdem zeigt das Kreislaufsystem 5 eine Gemischfördereinrichtung 7 bzw. Pumpe 7.

Der gesamte Aufbau stellt dabei ein Brennstoffzellensystem, insbesondere ein Direkt-Methanol-Brennstoffzellensystem (DMFC) dar.

Weiterhin ist ein Tank 21 vorgesehen, in dem der benötigte Kraftstoff mitgeführt wird. Über eine Leitung 24 wird der Kraftstoff mit Hilfe einer Förder- und/oder Dosierpumpe 22 in das Kreislaufsystem 5 gefördert. Dieser Kraftstoff dient dazu, den in der Brennstoffzelle 1 verbrauchten Kraftstoff zu ersetzen und somit das Mischungsverhältnis in dem Kraftstoff-Kühlmittel-Gemisch auf einem vorgegebenen Wert zu halten. Weiterhin ist in der Leitung 24 ein Anionen- und Kationentauscher 23 vorgesehen. Mit Hilfe dieses Anionen- und Kationentauschers 23 werden sämtliche Verunreinigungen aus dem Kraftstoff entfernt, so daß der Kraftstoff mit einer sehr hohen Reinheit in das Kreislaufsystem 5 gelangt.

Es wird bevorzugt ein Mischbettionentauscher eingesetzt. Alternativ kann der Anionen- und Kationentauscher 23 wenigstens einen als Kationentauscher ausgebildeten Harzbettionentauscher und wenigstens einen als Anionentauscher ausgebildeten Harzbettionentauscher aufweisen. Vorzugsweise handelt es sich um stark saure Harzbettionentauscher. Außerdem Können auch kapazitive Deionisierungssysteme (CDI) oder Elektrodeionisierungssysteme (EDI) eingesetzt werden.

Die Auswahl eines geeigneten Anionen- und Kationentauschers 23 ist kaum eingeschränkt, da die Anordnung in der Leitung 24 viele Vorteile aufweist. So herrscht dort im Vergleich zum Kreislaufsystem 5 ein niedriges Temperaturniveau, so daß es zu keiner thermischen Belastung kommt. Außerdem ist im Kraftstoff kein oder zumindest sehr wenig gelöstes CO₂ enthalten, was zu einer stark erhöhten Lebensdauer des Anionentauschers beiträgt. Weiterhin muß wiederum im Vergleich zum Kreislaufsystem nur ein geringer Volumenstrom gereinigt werden, so daß es keine Probleme bezüglich Druckverlust oder mechanischer Stabilität gibt. Schließlich kann im Kreislaufsystem 5 ein hohe Reinheit erzielt werden, da der Kraftstoff nahezu vollständig gereinigt zugeführt wird und sich im Kreislaufsystem nur verhältnismäßig wenig Verunreinigungen bilden.

Zur Entfernung dieser im Kreislaufsystem 5 gebildeten Verunreinigungen ist direkt im Kreislaufsystem 5 ein Kationentauscher 11 angeordnet. Dies ist möglich, da Kationentauscher im Gegensatz zu Anionentauscher auch bei höheren Temperaturen betrieben werden können. Beispielsweise kann der Kationentauscher 11 als Harzbettionentauscher ausgeführt sein.

Gemäß dem Ausführungsbeispiel von Fig. 1 ist es außerdem günstig, wenn der Kationentauscher 11 entweder als kapazitives Deionisierungssystem (CDI) oder als Elektrodeionisierungssystem (EDI) ausgeführt ist. Diese beiden an sich bekannten Arten von Deionisierungssystemen, bei denen der zu deionisierende Volumenstrom durch entsprechend angeordnete elektrische Felder strömt, durch welche die Ionen dann zu einer jeweiligen Elektrode abgeführt werden, bietet die Möglichkeit, daß er unabhängig von der Art der Ionen, und im Falle von CDI zum großen Teil unabhängig von der Temperatur des ihn durchströmenden Stoffstroms, hier also des Kraftstoff-Kühlmittel-Gemisches, seine volle Funktionsfähigkeit entfalten kann. Außerdem können durch Aufbauten mit einem EDI oder einem CDI zumindest Teile des in dem Kraftstoff-Kühlmittel-Gemisch gelösten CO₂ mit entfernt werden. Durch diese Entfernung der Kohlensäure kann die Aggressivität des Kraftstoff-Kühlmittel-Gemisches gegenüber Leitungselementen oder dergleichen reduziert werden.

Ein weiteres Ausführungsbeispiel zeigt Fig. 2, wobei gleiche Teile mit gleichen Bezugszeichen gekennzeichnet sind. Abweichend von Fig. 1 wird nach der Pumpe 7 das Kreislaufsystem 5 in einen Hauptstrom 8 und einen Bypass 9 aufgeteilt. In einer Ventileinrichtung 10 werden der Hauptstrom 8 und der Bypass 9 wieder zusammengeführt und das Kreislaufsystem führt zurück zum Anodenraum 2 der Brennstoffzelle 1.

In allen dargestellten Ausführungsbeispielen kann die Ventileinrichtung 10 als Drehschieberventil ausgebildet sein, welches durch einen Hilfsantrieb betätigt wird und mittels einer Rechnereinheit oder dergleichen in Abhängigkeit der erforderlichen Volumenströme und/oder in Abhängigkeit der Temperatur des Kraftstoff-Kühlmittel-Gemisches gesteuert oder geregelt werden kann.

Die hier dargestellte beispielhafte Reihenfolge der Elemente 2, 6, 7, 8 und 9 des Kreislaufs 5 kann selbstverständlich auch verändert werden ohne das Grundprinzip der Erfindung zu beeinflussen. Der Kationentauscher 11 ist gemäß Fig. 2 in der Bypassleitung 9 angeordnet. Eine solche Anordnung hat verschiedene Vorteile. Da die Harzbettionentauscher vergleichsweise aufwendige Konstruktionen darstellen, deren Harze gelegentlich regeneriert oder ausgetauscht werden müssen, ist es hier besonders günstig, daß der erforderliche Kationentauscher 11 durch die Existenz des Bypasses 9 sehr klein ausgebildet sein kann. Außerdem ist es möglich, daß zukünftige Brennstoffzellensysteme bei höheren Temperaturen betrieben werden. In diesem Fall kann es notwendig sein, daß in Strömungsrichtung vor dem Kationentauscher 11 ein Kühlwärmetauscher 12 angeordnet wird. Dieser kühlt die Temperatur des in dem Bypass 9 strömenden Volumenstroms in der Art ab, daß ein Betrieb des entsprechenden Kationentauschers 11 problemlos möglich ist.

Außerdem zeigt der Aufbau gemäß Fig. 2 einen optionalen Heizwärmetauscher 13, welcher sich gegebenenfalls nach dem Kationentauscher 11 anschließen kann. Dieser optionale Heizwärmetauscher 13 wird dann erforderlich, wenn der Volumenstrom nach dem Kationentauscher 11 aufgrund der danach geforderten Betriebsparameter wieder aufgeheizt werden muß. Üblicherweise kann auf einen derartigen Heizwärmetauscher 13 jedoch verzichtet werden, da der durch den Bypass 9 strömende Volumenstrom im Verhältnis zu dem Hauptstrom 8 so gering ist, daß die vergleichsweise kleine Verringerung der Temperatur des gesamten Volumenstroms nach dem Zusammenfließen des durch den Bypass 9 fließenden Volumenstroms und des Hauptstroms 8 vernachlässigbar ist. Prinzipiell ist es natürlich auch möglich, entsprechende Kühl- und/oder Heizwärmetauscher 12, 13 im Hauptstrom 8 vorzusehen. Allerdings sind in diesem Falle hohe Kühl- beziehungsweise Heizleistungen notwendig.

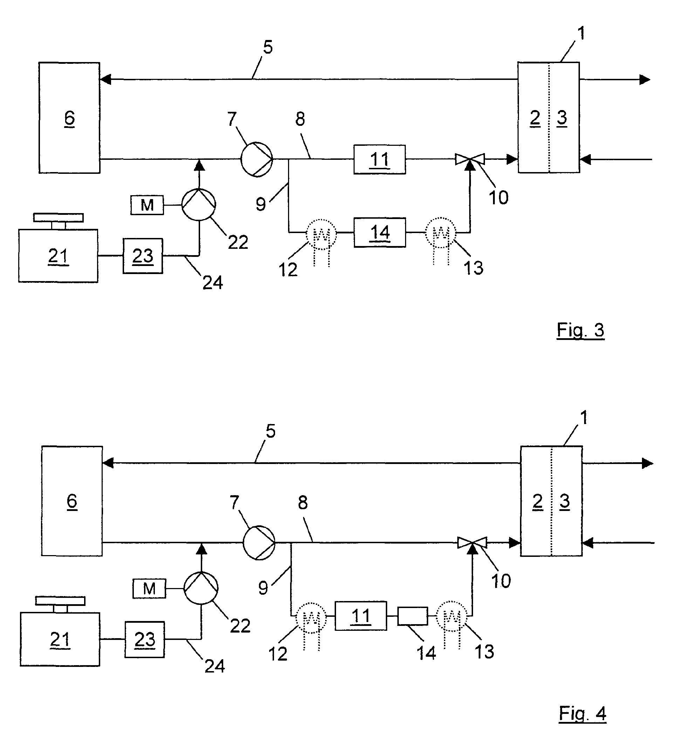

Im Ausführungsbeispiel gemäß Fig. 3 ist der Kationentauscher 11 wiederum im Hauptstrom 8 angeordnet, während in der Bypassleitung 9 ein zusätzlicher Anionentauscher 14 vorgesehen ist. Während der Kationentauscher 11, wie bereits erläutert, der Temperatur im Hauptstrom 8 stand hält, muß der zusätzliche Anionentauscher 14 unter Umständen mit entsprechenden Kühl- und Heizwärmetauschern 12, 13 auf einer verträglichen Temperatur gehalten werden.

Im Ausführungsbeispiel gemäß Fig. 4 sind schließlich sowohl der Kationentauscher 11 als auch der Anionentauscher 14 in der Bypassleitung 9 angeordnet. Alternativ dazu kann selbstverständlich auch ein Mischbettharzaustauscher vorgesehen sein, welcher sowohl Kationen als auch Anionen aus dem Volumenstrom eliminieren kann. Auch hier können entsprechende Kühl- beziehungsweise Heizwärmetauscher 12, 13 vorgesehen werden.

Kern der Erfindung ist die Tatsache, daß durch die Anordnung eines Anionen- und Kationentauschers 23 in der Leitung 24 zwischen Tank 21 und Kreislaufsystem 5 der Kraftstoff sehr rein in das Kreislaufsystem 5 geführt wird. Daher reicht es aus, im Kreislaufsystem 5 selbst einen Kationentauscher 11 vorzusehen, welcher bezüglich der zulässigen Temperatur unkritisch ist. Ein bezüglich Betriebstemperatur kritischer Anionentauscher 14 kann zwar zusätzlich in der Bypassleitung 9 vorgesehen werden, ist aber nicht zwingend notwendig.

In der Leitung 24 kann aufgrund der unkritischen Bedingungen jede Art von Anionen- und Kationentauscher 23 verwendet werden. Vorzugsweise wird ein Mischbettionentauscher verwendet. Der Anionen- und Kationentauscher 23 kann aber auch wenigstens einen als Kationentauscher ausgebildeten Harzbettionentauscher und wenigstens einen separaten, als Anionentauscher ausgebildeten Harzbettionentauscher aufweisen. Außerdem können auch kapazitive Deionisierungssysteme (CDI) oder Elektrodeionisierungssysteme (EDI) verwendet werden.

Im Kreislaufsystem 5 werden an die verwendeten Ionentauscher höhere Anforderungen gestellt. Daher wird dort vorzugsweise ein als Harzbettionentauscher ausgebildeter Kationentauscher 11 vorgesehen. Auch das CDI-Verfahren kann aufgrund seiner Temperaturbeständigkeit direkt im Hauptstrom angeordnet werden.

In der Bypassleitung 9 können dagegen prinzipiell jede Art von Ionentauscher eingesetzt werden. So können beispielsweise auch als Harzbettionentauscher ausgebildete Anionentauscher oder das EDI-Verfahren eingesetzt werden. Bei temperaturempfindlichen Ionentauschern muß allenfalls der Volumenstrom in der Bypassleitung 9 so geregelt werden, daß hier keine Temperaturen oberhalb der jeweiligen maximal zulässigen Betriebstemperaturen auftreten (V_{Bypass} = 0, wenn T_{Medium} > Tₘₐₓ. _{Betrieb}). Dies kann beispielsweise über eine Temperaturregelung der Ventileinrichtung 10 erfolgen.

## Patentansprüche

1. Vorrichtung zur Aufbereitung eines Kraftstoff-Kühlmittel-Gemisches in einem Brennstoffzellensystem, insbesondere in einem Direkt-Methanol-Brennstoffzellensystem, wobei das Kraftstoff-Kühlmittel-Gemisch zumindest teilweise in einem Kreislaufsystem (5) zirkuliert, wobei das Kreislaufsystem (5) wenigstens eine Gemischfördereinrichtung (7), einen Anodenraum (2) einer Brennstoffzelle (1) des Brennstoffzellensystems und wenigstens einen Ionentauscher (11) aufweist, wobei ein Tank (21) zur Aufnahme des Kraftstoffes und eine Leitung (24) zur Zufuhr des Kraftstoffes in das Kreislaufsystem (5) vorgesehen ist,
**dadurch gekennzeichnet,**
**daß** zusätzlich in der Leitung (24) ein Anionen- und Kationentauscher (23) vorgesehen ist und daß der Ionentauscher (11) als Kationentauscher ausgeführt ist.

2. Vorrichtung nach Anspruch 1,
**dadurch gekennzeichnet,**
**daß** der Kationentauscher (11) in einem parallel zu einem Hauptstrom (8) des Kreislaufs (5) verlaufenden Bypass (9) angeordnet ist, wobei der Hauptstrom (8) und der Bypass (9) in Durchströmungsrichtung nach dem Kationentauscher (11) mittels einer steuer- oder regelbaren Ventileinrichtung (10) wieder zusammengeführt sind.

3. Vorrichtung nach Anspruch 1 oder 2,
**dadurch gekennzeichnet,**
**daß** in einem parallel zu einem Hauptstrom (8) des Kreislaufs (5) verlaufenden Bypass (9) zusätzlich ein Anionentauscher (14) angeordnet ist, wobei der Hauptstrom (8) und der Bypass (9) in Durchströmungsrichtung nach dem Ionentauscher (11, 14) mittels einer steuer- oder regelbaren Ventileinrichtung (10) wieder zusammengeführt sind.

4. Vorrichtung nach Anspruch 2 oder 3,
**dadurch gekennzeichnet, daß**
die Ventileinrichtung (10) in Abhängigkeit einer Temperatur des Kraftstoff-Kühlmittel-Gemisches steuer- oder regelbar ist.

5. Vorrichtung nach einem der Ansprüche 1 bis 4,
**dadurch gekennzeichnet,**
**daß** in Durchströmungsrichtung vor dem Ionentauscher (11, 14) ein Kühl-Wärmetauscher (12) in dem Kreislauf (5) angeordnet ist.

6. Vorrichtung nach einem der Ansprüche 1 bis 5,
**dadurch gekennzeichnet**,
in Durchströmungsrichtung nach dem Ionentauscher (11, 14) ein Heiz-Wärmetauscher (13) angeordnet ist.

7. Vorrichtung nach Anspruch 1,
**dadurch gekennzeichnet,**
**daß** der Ionentauscher (11, 14) als Elektrodeionisierungssystem (EDI), als kapazitives Deionisierungssystem (CDI) oder als wenigstens ein Harzbettionentauscher ausgebildet ist.

8. Vorrichtung nach Anspruch 1,
**dadurch gekennzeichnet,**
**daß** der Anionen- und Kationentauscher (23) als Mischbett-Ionentauscher, als kapazitives Deionisierungssystem (CDI) oder als Elektrodeionisierungssystem (EDI) ausgebildet ist.

9. Vorrichtung nach Anspruch 1,
**dadurch gekennzeichnet,**
**daß** der Anionen- und Kationentauscher (23) wenigstens einen als Kationentauscher ausgebildeten Harzbettionentauscher und wenigstens einen als Anionentauscher ausgebildeten Harzbettionentauscher aufweist.
